(19) Europäisches Patentamt
European Patent Office
Office européen des brevets

(11) **EP 4 279 517 A1**

(12) **EUROPEAN PATENT APPLICATION**
published in accordance with Art. 153(4) EPC

(43) Date of publication:
**22.11.2023 Bulletin 2023/47**

(21) Application number: **22756170.1**

(22) Date of filing: **15.02.2022**

(51) International Patent Classification (IPC):
***C08F 279/02*** *(2006.01)* ***C08F 220/00*** *(2006.01)*
***C08L 9/00*** *(2006.01)* ***C08L 33/06*** *(2006.01)*
***C08L 33/12*** *(2006.01)* ***C08L 101/00*** *(2006.01)*

(52) Cooperative Patent Classification (CPC):
**C08F 220/00; C08F 279/02; C08L 9/00; C08L 33/06; C08L 33/12; C08L 101/00**

(86) International application number:
**PCT/JP2022/005940**

(87) International publication number:
**WO 2022/176852 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2021 JP 2021025659**

(71) Applicant: **Mitsubishi Chemical Corporation**
**Chiyoda-ku**
**Tokyo 100-8251 (JP)**

(72) Inventors:
- **AOKI Yutaka**
  **Tokyo 100-8251 (JP)**
- **NIINO Hiroshi**
  **Tokyo 100-8251 (JP)**
- **OKAMOTO Eiko**
  **Tokyo 100-8251 (JP)**
- **NISHII Hiroyuki**
  **Tokyo 100-8251 (JP)**
- **UEDA Masahiro**
  **Tokyo 100-8251 (JP)**
- **IIMORI Masashi**
  **Tokyo 100-8251 (JP)**
- **KUWAHARA Atsushi**
  **Tokyo 100-8251 (JP)**

(74) Representative: **Ter Meer Steinmeister & Partner Patentanwälte mbB**
**Nymphenburger Straße 4**
**80335 München (DE)**

# (54) RESIN ADDITIVE, RESIN COMPOSITION, AND MOLDED ARTICLE

(57) The present invention provides a resin additive capable of imparting low temperature impact properties to a resin material, a resin composition comprising the resin additive, and a molded article formed from the resin composition. The resin additive of the present invention is a polymer having a structural unit (a1) derived from the following monomer (1); the resin composition of the present invention comprises the resin additive and a resin material; and the molded article of the present invention is formed from the resin composition.

[Chemical Formula 1]

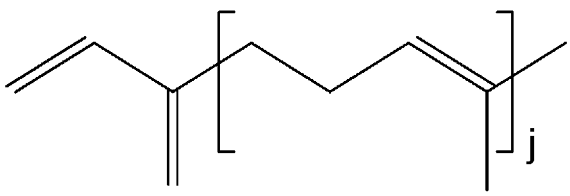

・・・(1)

EP 4 279 517 A1

## Description

[Technical Field]

The present invention relates to a resin additive, a resin composition and a molded article.

Priority is claimed on Japanese Patent Application No. 2021-25659, filed February 19, 2021, the content of which is incorporated herein by reference.

[Background Art]

Resin additives are used in members of electronic equipment, electrical equipment, office automation (OA) equipment or the like, automobile members, building components, and the like in order to improve the low temperature impact strength of resins so that they can be used even at low temperatures. As a resin additive, a copolymer of a component having a low glass transition temperature and a component having high compatibility with the resin material to be added has been proposed (for example, Patent Documents 1 and 2).

[Citation List]

[Patent Documents]

[Patent Document 1] Japanese Unexamined Patent Application, First Publication No. S49-10237
[Patent Document 2] Japanese Unexamined Patent Application, First Publication No. 2015-172208

[Summary of Invention]

[Technical Problem]

Depending on the application of the resin material, impact properties at low temperatures may be required. Therefore, there is a need for a novel resin additive that can impart low temperature impact properties to resin materials.

The present invention provides a resin additive capable of imparting low temperature impact properties to a resin material, a resin composition comprising the resin additive, and a molded article formed from the resin composition.

[Solution to Problem]

The present invention includes the following aspects.

[1] A resin additive that is a polymer having a structural unit (a1) derived from a monomer (1) represented by the following formula (1).

[Chemical Formula 1]

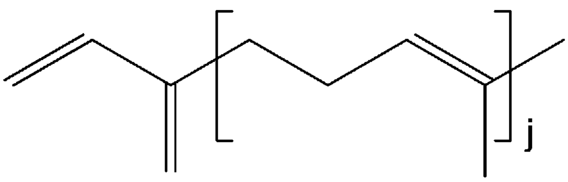

・・・(1)

In the formula (1), j is an integer from 1 to 5.
[2] The resin additive according to [1], wherein the polymer is a copolymer comprising a polymer chain (A) having the structural unit (a1) and a polymer chain (B) that does not substantially have the structural unit (a1).
[3] The resin additive according to [2], wherein the polymer chain (A) has a crosslinked structure.
[4] The resin additive according to [2] or [3], wherein the polymer chain (A) further has a structural unit (a2) derived from an alkyl (meth)acrylate.
[5] The resin additive according to [4], wherein the alkyl (meth)acrylate is methyl methacrylate.

[6] The resin additive according to any one of [2] to [5], wherein a ratio of the structural unit (a1) is from 30 to 99.9% by mass with respect to 100% by mass of the polymer chain (A).
[7] The resin additive according to any one of [2] to [6], wherein the polymer chain (A) has a glass transition temperature of less than 0°C.
[8] The resin additive according to any one of [2] to [7], wherein the polymer chain (B) has a structural unit (b 1) derived from an alkyl (meth)acrylate.
[9] The resin additive according to [8], wherein the alkyl (meth)acrylate is methyl methacrylate.
[10] The resin additive according to any one of [2] to [9], wherein a ratio of the polymer chain (A) is from 50 to 90% by mass with respect to a total of 100% by mass of the polymer chain (A) and the polymer chain (B).
[11] The resin additive according to any one of [2] to [10], wherein a ratio of the polymer chain (A) is 80% by mass or less with respect to a total of 100% by mass of the polymer chain (A) and the polymer chain (B).
[12] The resin additive according to any one of [2] to [11], wherein the copolymer is a graft copolymer in which the polymer chain (B) is a graft chain.
[13] A resin additive that is a graft copolymer obtained, in the presence of a polymer chain (A) having a structural unit (a1) derived from a monomer (1) represented by the following formula (1), by polymerizing a vinyl monomer component that does not comprise the monomer (1).

[Chemical Formula 2]

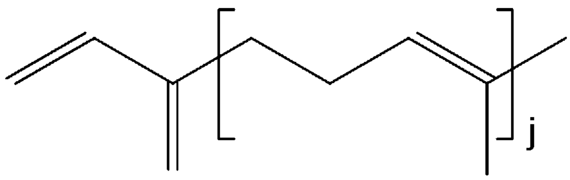

• • • (1)

In the formula (1), j is an integer from 1 to 5.
[14] The resin additive according to [13], wherein the vinyl monomer component is used in an amount of 10 to 50 parts by mass with respect to 100 parts by mass of the polymer chain (A).
[15] The resin additive according to any one of [1] to [14], wherein the monomer (1) is a monomer derived from a plant.
[16] The resin additive according to any one of [1] to [15], wherein j is 1 in the formula (1).
[17] A resin composition comprising the resin additive according to any one of [1] to [16] and a resin material.
[18] The resin composition according to [17], wherein a ratio of the resin additive is from 0.1 to 40% by mass with respect to a total of 100% by mass of the resin additive and the resin material.
[19] A molded article formed from the resin composition according to [17] or [18].

[Effects of Invention]

According to the present invention, there are provided a resin additive capable of imparting low temperature impact properties to a resin material, a resin composition comprising the resin additive, and a molded article formed from the resin composition.

[Description of Embodiments]

In the present specification, the definitions of the following terms are adopted.
A "structural unit" means a structural unit derived from a monomer, that is, a structural unit formed by polymerizing a monomer, or a structural unit in which a part of the structural unit is converted into another structure by treating a polymer.
Alkyl acrylates and alkyl methacrylates are collectively called "alkyl (meth)acrylates".
A monomer represented by a formula (1) is referred to as a monomer (1).
A numerical range represented by a symbol "-" means a numerical range that includes numerical values before and after this symbol "-" as the lower limit and upper limit values.
The numerical ranges of the contents, various physical property values, and property values disclosed in the present specification can be made into new numerical ranges by arbitrarily combining the lower limit and upper limit values thereof.

[Resin additive]

A resin additive of the present invention is a polymer (C) having a structural unit (a1) derived from the following monomer (1).

[Chemical Formula 3]

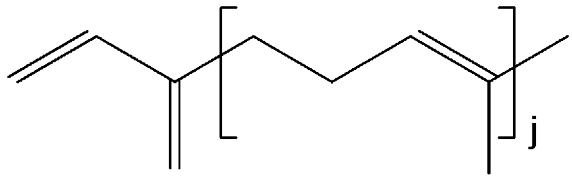

. . . (1)

In the formula (1), j is an integer from 1 to 5.

In the formula (1), j is an integer of 1 to 5, preferably an integer of 1 to 2, and more preferably 1. The monomer (1) is myrcene when j = 1 and farnesene when j = 2.

As the monomer (1), a single type of monomer may be used alone, or two or more types of monomers may be used in combination.

The monomer (1) is preferably a monomer derived from a plant. When the monomer (1) is derived from a plant, the resin additive contributes to a carbon recycling society.

In a preferred embodiment, the polymer (C) is a copolymer comprising a polymer chain (A) having the structural unit (a1) and a polymer chain (B) that does not substantially have the structural unit (a1) (hereinafter also referred to as an "AB copolymer").

The polymer chain (A) and the polymer chain (B) will be described in detail below.

<Polymer chain (A)>

The polymer chain (A) preferably has a crosslinked structure. When the polymer chain (A) has a crosslinked structure, the effect of improving the low temperature impact properties when the AB copolymer is added to the resin material can be easily obtained sufficiently. Inclusion of a crosslinked structure in the polymer chain (A) can be confirmed because the polymer chain (A) remains undissolved when the polymer chain (A) is immersed in a good solvent such as acetone, toluene, or tetrahydrofuran.

The polymer chain (A) preferably further has a structural unit (a2) derived from an alkyl (meth)acrylate in addition to the structural unit (a1). When the polymer chain (A) further has the structural unit (a2), the optical properties are likely to be improved when the AB copolymer is added to the resin material.

The polymer chain (A) may have a structural unit (a3) derived from another monomer other than the monomer (1) and alkyl (meth)acrylates, if necessary.

(Structural unit (a1))

The structural unit (a1) is derived from the monomer (1). Since the polymer chain (A) has the structural unit (a1), the low temperature impact properties can be imparted when the AB copolymer is added to the resin material.

A ratio of the structural unit (a1) is preferably from 30 to 99.9% by mass with respect to a total of 100% by mass of all structural units of the polymer chain (A). When the ratio of the structural unit (a1) is equal to or more than 30% by mass, the low temperature impact properties are likely to be obtained when the AB copolymer is added to the resin material. When the ratio of the structural unit (a1) is equal to or less than 99.9% by mass, the optical properties are likely to be improved when the AB copolymer is added to the resin material. The ratio of the structural unit (a1) is more preferably from 40 to 99.9% by mass, and still more preferably from 45 to 99.9% by mass.

The ratio of the structural unit (a1) with respect to the total of 100% by mass of all structural units of the polymer chain (A) can be calculated from the charged amount of the monomer (1).

(Structural unit (a2))

The structural unit (a2) is a structural unit derived from an alkyl (meth)acrylate. Examples of the alkyl (meth)acrylate include methyl acrylate, ethyl acrylate, butyl acrylate, propyl acrylate, 2-ethylhexyl acrylate, glycidyl acrylate, octyl acrylate, phenyl acrylate, 1-naphthyl acrylate, 2-naphthyl acrylate, p-diphenyl acrylate, o-diphenyl acrylate, o-chlorophenyl acrylate, 4-methoxyphenyl acrylate, 4-chlorophenyl acrylate, 2,4,6-trichlorophenyl acrylate, 4-tert-butylphenyl acrylate, methyl methacrylate, ethyl methacrylate, butyl methacrylate, propyl methacrylate, and 2-ethylhexyl methacrylate.

As the structural unit (a2), a single type of structural unit may be used alone, or two or more types of structural units may be used in combination.

From the viewpoint of optical properties when the AB copolymer is added to the resin material, the structural unit (a2) is preferably a structural unit (a2) derived from an alkyl (meth)acrylate, and more preferably at least one selected from the group consisting of a structural unit derived from methyl (meth)acrylate, a structural unit derived from ethyl (meth)acrylate and a structural unit derived from butyl (meth)acrylate.

A ratio of the structural unit (a2) is preferably from 0.1 to 70% by mass with respect to a total of 100% by mass of all structural units of the polymer chain (A). When the ratio of the structural unit (a2) is equal to or more than 0.1% by mass, the effect of improving the optical properties when the AB copolymer is added to the resin material can be easily obtained sufficiently. Further, when the ratio of the structural unit (a2) is equal to or less than 70% by mass, the effect of improving the low temperature impact properties when the AB copolymer is added to the resin material can be easily obtained sufficiently. The ratio of the structural unit (a2) is more preferably from 0.1 to 60% by mass, and still more preferably from 0.1 to 55% by mass with respect to a total of 100% by mass of all structural units of the polymer chain (A).

The ratio of the structural unit (a2) with respect to the total of 100% by mass of all structural units of the polymer chain (A) can be calculated from the charged amount of alkyl (meth)acrylate.

(Structural unit (a3))

The structural unit (a3) is a structural unit derived from another monomer. Examples of other monomers include aromatic vinyl monomers such as styrene and α-methylstyrene; diene-based monomers such as 1,3-butadiene and isoprene; vinyl cyanide monomers such as acrylonitrile and methacrylonitrile; vinyl ether-based monomers such as vinyl methyl ether and vinyl ethyl ether; carboxylic acid-based vinyl monomers such as vinyl acetate and vinyl butyrate; olefin-based monomers such as ethylene, propylene and isobutylene; vinyl halide monomers such as vinyl chloride and vinylidene chloride; and maleimide-based monomers such as maleimide, N-phenylmaleimide, N-cyclohexylmaleimide and N-methylmaleimide.

As the structural unit (a3), a single type of structural unit may be used alone, or two or more types of structural units may be used in combination.

Another monomer may be a crosslinking agent such as allyl (meth)acrylate, divinylbenzene, and 1,3-butylene dimethacrylate.

As another monomer, a single type of monomer may be used alone, or two or more types of monomers may be used in combination.

When using another monomer, it is preferable to use a diene-based monomer or a crosslinking agent from the viewpoint of stably producing the AB copolymer.

A content of the structural unit (a3) is preferably from 0.1 to 10% by mass with respect to a total of 100% by mass of all structural units of the polymer chain (A). When the content of the structural unit (a3) is equal to or more than 0.1% by mass, sufficient reactivity is likely to be obtained in copolymerization of the polymer chain (A) and the polymer chain (B), which will be described later. When the content of the structural unit (a3) is equal to or less than 10% by mass, excellent low temperature impact properties are likely to be obtained when the AB copolymer is added to the resin material. The content of the structural unit (a3) is more preferably from 0.1 to 5% by mass, and still more preferably from 0.1 to 1% by mass with respect to a total of 100% by mass of all structural units of the polymer chain (A).

(Glass transition temperature)

A glass transition temperature (Tg) of the polymer chain (A) is preferably less than 0°C, more preferably equal to or less than -20°C, and still more preferably equal to or less than -40°C. When the glass transition temperature of the polymer chain (A) is less than 0°C, excellent low temperature impact properties are likely to be obtained when the AB copolymer is added to the resin material.

A value calculated by the following Fox formula (2) will be used as the "glass transition temperature of the polymer chain (A)".

$$1/(273.15 + Tg) = \Sigma(w_i/(273.15 + Tg_i)) \qquad \text{Formula (2)}$$

Each symbol in the formula (2) represents the following.

Tg: Tg (°C) of the polymer chain (A).

$w_i$: weight fraction of a monomer component i.
$Tg_i$: Tg (°C) of a homopolymer obtained by polymerizing the monomer component i.

A value described in Polymer Handbook Volume 1 (Wiley-Interscience) is used as a Tg value of the homopolymer.

When the polymer chain (A) has a structural unit derived from a monomer for which the Tg of the homopolymer is not described in the above document, the Tg of the polymer chain (A) is measured as follows. That is, it can be obtained from the peak temperature of tan δ when performing dynamic viscoelasticity measurement with respect to a test piece obtained by molding the polymer chain (A) as a polymer into a shape having a thickness of 2 mm, a width of 5 mm, and a length of 2 cm, and scanning, for example, from -100°C to 25°C, at a frequency of 1 Hz.

<Polymer chain (B)>

The polymer chain (B) does not substantially have the structural unit (a1). The expression "does not substantially have the structural unit (a1)" means that the content of the structural unit (a1) in the polymer chain (B) is equal to or less than 1% by mass with respect to the total amount of the polymer chain (B). The content of the structural unit (a1) in the polymer chain (B) is preferably equal to or less than 0.8% by mass with respect to the total amount of the polymer chain (B), more preferably equal to or less than 0.5% by mass with respect to the total amount of the polymer chain (B), still more preferably equal to or less than 0.1% by mass with respect to the total amount of the polymer chain (B), and particularly preferably equal to or less than 0.01% by mass with respect to the total amount of the polymer chain (B).

The polymer chain (B) preferably has a structural unit (b1) derived from an alkyl (meth)acrylate. Further, the polymer chain (B) may further have a structural unit (b2) derived from a monomer other than the alkyl (meth)acrylate, if necessary.

(Structural unit (b1))

The structural unit (b1) is derived from an alkyl (meth)acrylate. Examples of the alkyl (meth)acrylate for the structural unit (b1) include the same as those exemplified as the alkyl (meth)acrylate for the structural unit (a2) described above.

When the polymer chain (B) has the structural unit (b1), the dispersibility is favorable when the AB copolymer is added to the resin material, and it is easy to obtain a resin molded product having excellent low temperature impact properties. From the viewpoint of dispersibility when the AB copolymer is added to the resin material, the structural unit (b1) is preferably a structural unit derived from methyl methacrylate.

From the viewpoint of dispersibility when the AB copolymer is added to the resin material, a ratio of the structural unit (b1) is preferably from 50 to 100% by mass, more preferably from 70 to 100% by mass, and still more preferably from 80 to 100% by mass with respect to a total of 100% by mass of all structural units of the polymer chain (B).

(Structural unit (b2))

The polymer chain (B) may further have a structural unit (b2) derived from a monomer other than the alkyl (meth)acrylate, if necessary. Examples of other monomers include acrylate monomers other than alkyl (meth)acrylates such as glycidyl acrylate, phenyl acrylate, 1-naphthyl acrylate, 2-naphthyl acrylate, p-diphenyl acrylate, o-diphenyl acrylate, o-chlorophenyl acrylate, 4-methoxyphenyl acrylate, 4-chlorophenyl acrylate, 2,4, trichlorophenyl acrylate and 4-tert-butylphenyl acrylate; vinyl cyanide monomers such as acrylonitrile and methacrylonitrile; aromatic vinyl monomers such as styrene and α-methylstyrene; vinyl ether-based monomers such as vinyl methyl ether and vinyl ethyl ether; carboxylic acid-based vinyl monomers such as vinyl acetate and vinyl butyrate; olefin-based monomers such as ethylene, propylene and isobutylene; vinyl halide monomers such as vinyl chloride and vinylidene chloride; and maleimide-based monomers such as maleimide, N-phenylmaleimide, N-cyclohexylmaleimide and N-methylmaleimide. Among these, aromatic vinyl monomers are preferred, and styrene is more preferred, from the viewpoint of the resistance to thermal decomposition when the AB copolymer is added to the resin material. A single type of these monomers other than alkyl (meth)acrylates may be used alone, or two or more types thereof may be used in combination.

From the viewpoint of low temperature impact properties when the AB copolymer is added to the resin material, a ratio of the structural unit (b2) is preferably from 0 to 50% by mass with respect to a total of 100% by mass of all structural units of the polymer chain (B).

<Copolymer composition>

In the AB copolymer, a ratio of the polymer chain (A) is preferably from 50 to 90% by mass with respect to a

total of 100% by mass of the polymer chain (A) and the polymer chain (B). When the ratio of the polymer chain (A) is equal to or more than 50% by mass with respect to a total of 100% by mass of the polymer chain (A) and the polymer chain (B), excellent low temperature impact properties are likely to be obtained when the AB copolymer is added to the resin material. When the ratio of the polymer chain (A) is equal to or less than 90% by mass with respect to a total of 100% by mass of the polymer chain (A) and the polymer chain (B), dispersibility is favorable when the AB copolymer is added to the resin material. The lower limit of the ratio of the polymer chain (A) is preferably equal to or more than 55% by mass, and more preferably equal to or more than 60% by mass. The upper limit of the ratio of the polymer chain (A) is preferably equal to or less than 80% by mass, and more preferably equal to or less than 75% by mass. When the ratio of the polymer chain (A) is equal to or less than 80% by mass with respect to a total of 100% by mass of the polymer chain (A) and the polymer chain (B), excellent powder properties can be obtained.

The ratio of the polymer chain (A) with respect to a total of 100% by mass of the polymer chain (A) and the polymer chain (B) can be calculated from the charged amount of the monomers constituting the polymer chain (A) and the polymer chain (B).

The volume average particle diameter (Dv) of the AB copolymer is preferably from 50 to 300 nm, more preferably from 70 to 150 nm, and still more preferably from 80 to 120 nm. When the Dv of the AB copolymer is equal to or more than 50 nm, it is easy to obtain a molded article having excellent low temperature impact properties. When the Dv of the AB copolymer is equal to or less than 300 nm, it is easy to reduce the generation of cullet during the production of the AB copolymer.

The Dv of the AB copolymer is determined by the method described in Examples.

The number average particle diameter (Dn) of the AB copolymer is preferably from 30 to 200 nm, more preferably from 50 to 120 nm, and still more preferably from 60 to 100 nm. When the Dn of the AB copolymer is equal to or more than 30 nm, it is easy to obtain a molded article having excellent low temperature impact properties. When the Dn of the AB copolymer is equal to or less than 200 nm, it is easy to reduce the generation of cullet during the production of the AB copolymer.

The Dn of the AB copolymer is determined by the method described in Examples.

<Method for producing polymer>

(Method for producing polymer (C))

A method for producing the polymer (C) is not particularly limited. For example, a method of polymerizing a monomer component comprising the monomer (1) using an emulsion polymerization method, a suspension polymerization method, a solution polymerization method, or the like can be mentioned. The polymer chain (A) in the production of a powder of the AB copolymer, which will be described later, can be used as the polymer (C).

Among these, an emulsion polymerization method is preferred from the viewpoint that the particle diameter of the polymer (C) can be easily controlled. A method for producing the polymer (C) by an emulsion polymerization method will be described in detail below.

As the emulsion polymerization method, generally known methods, such as a batch addition polymerization method, a continuous addition polymerization method and a multi-stage polymerization method, of monomers, can be employed. When the emulsion polymerization method is used, the polymer (C), that is, a latex in which the polymer chain (A) is dispersed in water (hereinafter also referred to as "polymer chain (A) latex") can be obtained.

The emulsifier may be an emulsifier having an ionic hydrophilic moiety and a nonionic hydrophilic moiety in the same molecule, or may be a nonionic emulsifier. Examples of the emulsifier having an ionic hydrophilic moiety and a nonionic hydrophilic moiety in the same molecule include a carboxylic acid-based emulsifier, a phosphoric acid-based emulsifier, and a sulfonic acid-based emulsifier.

Examples of the carboxylic acid-based emulsifier include metal salts of saturated or unsaturated fatty acids having an alkyl group of 8 to 28 carbon atoms such as caprylic acid, pelargonic acid, capric acid, lauric acid, myristic acid, palmitic acid, margaric acid, stearic acid, arachidic acid, behenic acid, lignoceric acid, cerotic acid, montanic acid, myristoleic acid, palmitoleic acid, oleic acid, elaidic acid, vaccenic acid, ricinoleic acid, gadoleic acid, eicosenoic acid, erucic acid, nervonic acid, linoleic acid, eicosadienoic acid, docosadienoic acid, linolenic acid, pinolenic acid, eleostearic acid, Mead acid, eicosatrienoic acid, stearidonic acid, arachidonic acid, eicosatetraenoic acid, adrenic acid, bosseopentaenoic acid, eicosapentaenoic acid, Osbond acid, clupanodonic acid, tetracosapentaenoic acid, docosahexaenoic acid, and Nisinic acid; metal salts of oligocarboxylic acid compounds such as alkenylsuccinic acid; and metal salts of sarcosine derivatives such as N-lauroyl sarcosine and N-cocoyl sarcosine.

Examples of the phosphoric acid-based emulsifier include polyoxyethylene phenyl ether phosphate, polyoxyethylene alkyl phenyl ether phosphate, polyoxyethylene alkyl ether phosphate, and alkyl phosphate.

Examples of the sulfonic acid-based emulsifier include polyoxyalkylene alkyl ether sulfonates, alkylbenzene sulfonates, $\alpha$-sulfo fatty acid methyl ester salts, and $\alpha$-olefin sulfonates.

Further, examples of the nonionic emulsifier include polyoxyalkylene alkyl ethers, polyoxyethylene alkylene alkyl ethers, polyoxyethylene distyrenated phenyl ethers, polyoxyethylene tribenzylphenyl ethers, sorbitan fatty acid esters, polyoxyethylene sorbitan fatty acid esters, and polyoxyethylene fatty acid esters.

A single type of emulsifier may be used alone, or two or more types of emulsifiers may be used.

The amount of the emulsifier used is not particularly limited. For example, it is preferably from 0.1 to 20 parts by mass with respect to a total of 100 parts by mass of the monomers constituting the polymer chain (A). When the amount of the emulsifier used is equal to or more than 0.1 parts by mass, the emulsion stability tends to be improved. Further, when the amount of the emulsifier used is equal to or less than 20 parts by mass, coagulation of the obtained latex is facilitated in the production of the AB copolymer described later.

The polymerization initiator is not particularly limited. For example, azo-based initiators and peroxide-based initiators can be used. A single type of polymerization initiator may be used alone, or two or more types of polymerization initiators may be used in combination. The amount of the polymerization initiator used is preferably from 0.05 to 1.0 parts by mass with respect to a total of 100 parts by mass of the monomers constituting the polymer chain (A). The lower limit of the amount of the polymerization initiator used is more preferably equal to or more than 0.1 part by mass. The upper limit of the amount of the polymerization initiator used is more preferably equal to or less than 0.3 parts by mass.

When using a peroxide-based initiator, it can be used as a redox initiator in combination with a reducing agent. The amount of the reducing agent used is preferably from 0.0001 to 1 part by mass with respect to a total of 100 parts by mass of the monomers constituting the polymer chain (A).

The volume average particle diameter of the polymer chain (A) in the polymer chain (A) latex is preferably from 50 to 1,000 nm, and more preferably from 70 to 500 nm. When the volume average particle diameter of the polymer chain (A) is equal to or more than 50 nm, excellent low temperature impact properties can be easily obtained by adding the AB copolymer to the resin material. When the volume average particle diameter of the polymer chain (A) is equal to or less than 1,000 nm, the amount of cullet generated during the production of the polymer chain (A) can be easily reduced.

The volume average particle diameter of the polymer chain (A) can be controlled by adding an enlarging agent to the polymer chain (A) latex. Various materials can be used as an enlarging agent. Examples thereof include acid group-containing copolymers and oxoates. Examples of the acid group-containing copolymers include copolymers having acrylic acid, methacrylic acid, itaconic acid, or the like as constituents. Examples of the oxoates include alkali metal salts or alkaline earth metal salts of oxoacids, and at least one oxoate selected from salts of zinc, nickel, and aluminum. Examples of the oxoates include salts formed between sulfuric acid, nitric acid, phosphoric acid or the like, and potassium, sodium, magnesium, calcium, nickel, aluminum or the like.

(Method for producing AB copolymer)

The AB copolymer can be synthesized, for example, by polymerizing a vinyl monomer component that does not substantially comprise the monomer (1) in the presence of the polymer chain (A). The vinyl monomer component comprises, for example, an alkyl (meth)acrylate.

The AB copolymer can also be said to be a graft copolymer in which the polymer chain (B) is a graft chain. In this case, the amount of the vinyl monomer component used is preferably from 10 to 100 parts by mass, more preferably from 25 to 80 parts by mass, and still more preferably from 30 to 70 parts by mass with respect to 100 parts by mass of the polymer chain (A). When the amount of the vinyl monomer component used is equal to or more than the lower limit value of the above numerical range, the AB copolymer has excellent powder properties. When the amount of the vinyl monomer component used is equal to or less than the upper limit value of the above numerical range, the low temperature impact properties are excellent when the AB copolymer is added to the resin material.

For example, the AB copolymer can be produced by polymerizing an alkyl (meth)acrylate in the polymer chain (A) latex. For example, first, a monomer comprising an alkyl (meth)acrylate is added to the polymer chain (A) latex and impregnated, and then various radical polymerization initiators are caused to act to polymerize the monomer comprising the alkyl (meth)acrylate. Examples of the method of adding the radical polymerization initiator include a method of collectively adding the entire amount to the polymer chain (A) latex, and a method of adding dropwise into the polymer chain (A) latex at a constant rate.

The method of polymerizing the monomer comprising an alkyl (meth)acrylate is not particularly limited. For example, an emulsion polymerization method, a suspension polymerization method, and a solution polymerization method can be mentioned. Among these, an emulsion polymerization method is preferred from the viewpoint of controlling the particle diameter of the AB copolymer in accordance with the type of the resin material to be added and effectively exhibiting the low temperature impact properties. Hereinafter, a method for polymerizing a monomer comprising an alkyl (meth)acrylate by an emulsion polymerization method will be described in detail.

As the emulsion polymerization method, generally known methods, such as a batch addition polymerization method, a continuous addition polymerization method and a multi-stage polymerization method, of monomers, can be employed. When the emulsion polymerization method is used, a latex in which the AB copolymer is dispersed in water

(hereinafter also referred to as an "AB copolymer latex") can be obtained as a powder by drying through a spray drying method or a freeze drying method, or by coagulation.

Examples of the emulsifier in the production of the AB copolymer latex include the same emulsifiers as those used in the production of the polymer chain (A). A single type of emulsifier may be used alone, or two or more types of emulsifiers may be used. The emulsifier in the production of the AB copolymer latex may be the same as or different from the emulsifier used in the production of the polymer chain (A).

The amount of the emulsifier used is not particularly limited. For example, it is preferably from 0.1 to 20 parts by mass with respect to a total of 100 parts by mass of the monomers constituting the AB copolymer. When the amount of the emulsifier used is equal to or more than 0.1 parts by mass, the emulsion stability tends to be improved. Further, when the amount of the emulsifier used is equal to or less than 20 parts by mass, coagulation of the AB copolymer latex is facilitated. As for the emulsifier, the emulsifier used in the production of the polymer chain (A) may be used as it is as the emulsifier in the production of the AB copolymer latex, or another emulsifier may be added separately.

Examples of the polymerization initiator include the same polymerization initiators as those used in the production of the polymer chain (A). A single type of polymerization initiator may be used alone, or two or more types of polymerization initiators may be used. The polymerization initiator in the production of the AB copolymer latex may be the same as or different from the polymerization initiator used in the production of the polymer chain (A).

The amount of the polymerization initiator used is not particularly limited, but it is preferably from 0.05 to 1.0 parts by mass with respect to a total of 100 parts by mass of the monomers constituting the AB copolymer.

If necessary, in the AB copolymer latex obtained by emulsion polymerization, an additive such as an antioxidant may be blended. The AB copolymer latex may be produced by blending an antioxidant in advance and then performing emulsion polymerization. As the antioxidant, it is preferable to use at least one selected from the group consisting of a phenol-based antioxidant, a thioether-based antioxidant, and a phosphite-based antioxidant. The antioxidant may be blended in the form of a powder or tablet, or may be blended in a state of being dispersed in water. In the present invention, a method of adding the antioxidant dispersed in water to the AB copolymer latex is preferred. As a result, the antioxidant can be added more uniformly. Therefore, it is easy to suppress oxidative degradation of the polymer chain (A). In addition, better optical properties are likely to be obtained.

The amount of the antioxidant used is preferably from 0.0001 to 10 parts by mass with respect to 100 parts by mass of the monomers constituting the AB copolymer. When the amount of the antioxidant added is equal to or more than 0.0001 parts by mass, deterioration of the optical properties during molding of the resin composition to be described later can be easily suppressed. Further, when the amount of the antioxidant used is equal to or less than 10 parts by mass, deposition of the resin composition to be described later onto a mold is suppressed when injection molding is performed, and favorable surface appearance can be easily obtained. The lower limit of the amount of the antioxidant used is more preferably 0.001 parts by mass, and still more preferably 0.01 parts by mass. Further, the upper limit of the amount of the antioxidant used is more preferably 6 parts by mass, and still more preferably 3 parts by mass.

(Production of AB copolymer powder)

The AB copolymer latex obtained by emulsion polymerization can be recovered as a powder of the AB copolymer by drying through a spray drying method or a freeze drying method, or by coagulation. Among these, drying through a spray drying method or coagulation is preferred. In the case of drying using a spray drying method, the dispersibility when the AB copolymer powder is added to the resin material is likely to be improved. Further, when coagulation is performed, since impurities such as the emulsifier used in the emulsion polymerization can be easily removed, a highly pure AB copolymer powder can be obtained easily.

In the case of drying by a spray drying method, the AB copolymer latex is sprayed onto microdroplets and dried by blowing hot air thereto. Examples of devices for generating liquid droplets include rotating disk type devices, pressure nozzle type devices, and two-fluid nozzle type devices. Any of these devices may be used.

It is preferable to dry the AB copolymer latex by blowing hot air at 100°C or higher and 200°C or lower. When the hot air temperature is 100°C or higher, the latex can be sufficiently dried easily. When the hot air temperature is 200°C or lower, the thermal decomposition of the powder can be easily suppressed.

In the case of coagulation, the AB copolymer latex is charged into hot water in which a coagulant is dissolved, and the AB copolymer is salted out, separated, purified, coagulated, and made wet, followed by dehydration and drying. Examples of the coagulant include inorganic salts such as aluminum chloride, aluminum sulfate, sodium sulfate, magnesium sulfate, sodium nitrate and calcium acetate, and acids such as sulfuric acid. Among them, calcium acetate is particularly preferred.

A single type of coagulant may be used alone, or two or more types of coagulants may be used in combination, but when used in combination, it is necessary to select a combination that does not form water-insoluble salts. For example, the combined use of calcium acetate and sulfuric acid or its sodium salt is not preferred because it produces a water-insoluble calcium salt.

[Resin composition]

The resin composition comprises the resin additive described above and a resin material. The resin composition may further comprise an optional component other than the resin additive and the resin material.
The type of the resin material is not particularly limited. A thermoplastic resin is preferred as the resin material.
Examples of the resin material include styrene-based resins such as polystyrene, acrylonitrile/styrene copolymers (AS), acrylonitrile/butadiene/styrene copolymers (ABS), high impact polystyrene (HIPS), and syndiotactic polystyrene; acrylic resins such as polymethyl methacrylate; polyolefin-based resins such as polyethylene and polypropylene; polyesters such as polyethylene terephthalate and polybutylene terephthalate; polyamides such as 6-nylon, 6,6-nylon and polyphenylene terephthalamide; polycarbonate, polyarylate, polyphenylene ether, polyphenylene sulfide, polyether ketone, polyether ether ketone, polysulfone, polyether sulfone, polyamideimide, polyetherimide, and polyacetal.
Examples of the optional component other than the resin additive and the resin material include various auxiliary agents. Examples of the auxiliary agents include flame retardants, anti-dripping agents, antioxidants, ultraviolet absorbers, light stabilizers, mold release agents, lubricants, sliding agents, coloring agents, fluorescent whitening agents, phosphorescent pigments, fluorescent dyes, and antistatic agents.
By adding the resin additive to various resin materials, it is possible to impart low temperature impact properties to resin molded articles. Fillers such as talc, mica, calcium carbonate, glass fibers, carbon fibers, and potassium titanate fibers may be blended in order to improve the strength, rigidity and flame retardancy of the resin molded articles.
The resin composition can be produced by mixing or melt-kneading the resin additive and the resin material. If necessary, an optional component other than the resin additive and the resin material may be blended. For mixing or melt-kneading, for example, a Henschel mixer, a Banbury mixer, a single screw extruder, a twin screw extruder, a double roll, a kneader, a Brabender mixer or the like is used.
The mixing ratio of the resin additive and the resin material in the resin composition may be appropriately determined in accordance with the desired physical properties and the like, and is not particularly limited. The ratio of the resin additive is preferably from 0.1 to 40% by mass with respect to a total of 100% by mass of the resin additive and the resin material. When the ratio of the resin additive is equal to or more than 0.1% by mass, favorable low temperature impact properties are likely to be obtained. When the ratio of the resin additive is equal to or less than 40% by mass, deterioration of the optical properties can be easily suppressed. The lower limit of the ratio of the resin additive is more preferably 0.5% by mass, and still more preferably 1% by mass. The upper limit of the ratio of the resin additive is more preferably 20% by mass, and still more preferably 15% by mass.
The resin composition according to the present invention may be a molded article formed into any shape. Examples of molding methods include compression molding, transfer molding, injection molding, blow molding, vacuum molding, extrusion molding, laminate molding, and calendar molding.
The resin composition can be used in a wide range of fields, including miscellaneous goods, household electrical appliances, building materials, and automobile parts. For example, it is useful as a member of electrical equipment, electronic equipment, OA equipment or the like, automobile parts such as automobile headlamps and automobile interior materials, and building components.

[Examples]

The present invention will be described in detail below with reference to Examples and Comparative Examples, but the present invention is not limited by the following description. Further, hereinafter, the term "part(s)" means "part(s) by mass".

(Ratio of structural units and ratio of polymer)

The ratio of each structural unit in the polymer chain (A) was calculated from the charged amount of monomers. Further, the ratio of the polymer chain (A) with respect to a total of 100% by mass of the polymer chain (A) and the polymer chain (B) was calculated from the charged amount of the monomers constituting the polymer chain (A) and the polymer chain (B).

(Low temperature impact properties)

The low temperature impact properties were evaluated by measuring the Charpy strength of a resin composition formed to a thickness of 4 mm at -30°C in accordance with JIS K7111.

(Optical properties)

The optical properties were evaluated by measuring the yellow index (YI) value of the resin composition as described below. The YI value was measured by a reflected light measurement method in accordance with JIS K7105 using a spectral colorimeter (model name "SE2000", manufactured by Nippon Denshoku Industries Co., Ltd.) under the conditions of a C light source and a 2-degree field of view.

First, the YI value (YIB) of the resin composition formed to a thickness of 2 mm was measured. Subsequently, the resin composition was subjected to heat aging at a temperature of 120°C for 72 hours using a high temperature oven (model name: "PMS-B", manufactured by Tabai Espec Corporation). The YI value (YIA) of the resin composition after heat aging was measured, and the ΔYI value was calculated by the following formula.

$$\Delta YI = YIA - YIB$$

The smaller the YIB and ΔYI values, the better the optical properties.

[Example 1]

(Production of polymer (A))

As described below, a polymer chain (A) having a unit structure (a1) derived from myrcene, a unit structure (a2) derived from butyl acrylate, and allyl methacrylate (a3) was produced. Table 1 shows the ratio of the structural units (a1) to (a3) with respect to a total of 100% by mass of all the structural units of the polymer chain (A).

74.8 parts of myrcene (manufactured by Yasuhara Chemical Co., Ltd.), 24.8 parts of butyl acrylate (manufactured by Mitsubishi Chemical Corporation) and 0.4 parts of allyl methacrylate (manufactured by Mitsubishi Chemical Corporation) as monomers, and 0.8 parts of sodium dodecylbenzenesulfonate as an emulsifier were used. These were added to 64 parts of deionized water, and the resulting mixture was stirred at 15,000 rpm for 5 minutes to obtain a stable premixed emulsion.

The obtained premixed emulsion and 240 parts of deionized water were placed in a polymerization apparatus equipped with a stirrer, a condenser tube, and a thermometer, and after the inside of the polymerization apparatus was sufficiently replaced with nitrogen, the temperature was raised to 60°C. Subsequently, 0.7 parts of Percumyl P (manufactured by NOF Corporation) as a polymerization initiator, 0.002 parts of ferrous sulfate and 0.006 parts of sodium ethylenediaminetetraacetate as reducing agents, and 0.3 parts of sodium formaldehyde sulfoxylate were added to initiate polymerization. After 8 hours, a polymer chain (A) latex comprising the polymer chain (A) having a crosslinked structure was obtained.

(Production of AB copolymer)

An AB copolymer was produced by polymerizing methyl methacrylate in the obtained polymer chain (A) latex as described below. Table 1 shows the ratio of the polymer chain (A) with respect to a total of 100% by mass of the polymer chain (A) and the polymer chain (B).

0.1 part of t-butyl hydroperoxide was added as a polymerization initiator to 25 parts of methyl methacrylate (manufactured by Mitsubishi Chemical Corporation). The obtained solution was continuously added dropwise into the polymer chain (A) latex over 60 minutes to carry out polymerization. After that, the temperature inside the polymerization apparatus was raised to 70°C, and stirring was continued for 60 minutes.

0.25 parts of Irg 1076 (n-octadecyl-3-(3’,5’di-t-butyl-4’-hydroxyphenyl) propionate, manufactured by BASF Japan Ltd.) as a phenol-based antioxidant, and 0.75 parts of DLDTP (didodecyl 3,3’-thiodipropionate, manufactured by Bayer AG) as a thioether-based antioxidant were added to the obtained AB copolymer latex. The resulting mixture was added to 460 parts of deionized water containing 5 parts by mass of calcium acetate, and coagulated, washed with water, dehydrated and dried to obtain an AB copolymer in the form of a powder.

(Production of resin composition)

Using the obtained AB copolymer as a resin additive, 3 parts of the resin additive and 97 parts of a polycarbonate resin (Iupilon S2000F, manufactured by Mitsubishi Engineering-Plastics Corporation) were placed in a polyethylene bag, and the polyethylene bag was thoroughly shaken manually and hand blended. After that, the resulting mixture was melt-kneaded at 280°C using a twin screw extruder (PCM30 (product name) manufactured by Ikegai Corporation), and the extruded strand was cut to obtain a pellet.

The obtained pellet was molded using an injection molding machine (SE100DU, manufactured by Sumitomo Heavy Industries, Ltd.) at a molding temperature of 280°C and a mold temperature of 80°C to obtain a resin composition. Table 1 shows the evaluation results of the obtained resin composition.

[Examples 2 to 10 and Comparative Example 1]

A polymer chain (A) latex was obtained in the same manner as in Example 1 with the exception that the amount of each monomer charged was changed so that the ratios of the structural units (a1) to (a3) were as shown in Table 1, respectively. Subsequently, an AB copolymer was obtained in the same manner as in Example 1 with the exception that the amount of each monomer charged was changed so that the ratio of the polymer chain (A) with respect to a total of 100% by mass of the polymer chain (A) and the polymer chain (B) was as shown in Table 1.
Using the obtained AB copolymer as a resin additive, a resin composition was obtained in the same manner as in Example 1. Table 1 shows the evaluation results of the obtained resin composition.

[Reference Example 1]

A resin composition was obtained in the same manner as in Example 1 with the exception that only the polycarbonate resin was used without using the AB copolymer.
Table 1 shows the evaluation results of the obtained resin composition.

[Table 1]

| | Ratio of each structural unit in polymer chain (A) [wt%] | | | Ratio of polymer chain (A) in AB copolymer [wt%] | Low temperature impact properties | Optical properties | |
|---|---|---|---|---|---|---|---|
| | Structural unit (a1) | Structural unit (a2) | Structural unit (a3) | | Charpy strength [kJ/$m^2$] | $YI_B$ | ΔYI |
| Ex. 1 | 74.8 | 24.8 I | 0.4 | 80 | 17.1 | 137 | 5 |
| Ex. 2 | 49.8 | 49.8 | 0.4 | 80 | 18.6 | 25 | 14 |
| Ex. 3 | 24.8 | 74.8 | 0.4 | 80 | 15.5 | 43 | 14 |
| Ex. 4 | 66.4 | 33.2 | 0.4 | 75 | 17.0 | 80 | 6 |
| Ex. 5 | 99.6 | 0.0 | 0.4 | 70 | 25.3 | 133 | 6 |
| Ex. 6 | 71.2 | 28.4 | 0.4 | 70 | 16.9 | 114 | 10 |
| Ex. 7 | 49.8 | 49.8 | 0.4 | 70 | 19.0 | 35 | 11 |
| Ex. 8 | 99.6 | 0.0 | 0.4 | 65 | 23.7 | 128 | 10 |
| Ex. 9 | 77.7 | 21.9 | 0.4 | 65 | 16.5 | 144 | 4 |
| Ex. 10 | 49.8 | 49.8 | 0.4 | 65 | 18.0 | 71 | 24 |
| Comp. Ex. 1 | 0.0 | 99.6 | 0.4 | 70 | 15.1 | 23 | 4 |
| Ref. Ex. 1 | - | - | - | - | 14.2 | 2 | 0.2 |

In Examples 1 to 10, favorable low temperature impact properties were obtained and sufficient optical properties were obtained. In Comparative Example 1 in which the polymer chain (A) did not comprise the structural unit (a1), the low temperature impact properties could not be imparted.

[Examples 11 to 21 and Comparative Examples 2 to 4]

Various AB copolymers shown in Table 2 were obtained in accordance with the following description.

[Table 2]

| Copolymer composition | | | | | | |
|---|---|---|---|---|---|---|
| Type | Composition of polymer chain (A) [wt%] | | | Composition of polymer chain (B) [wt%] | | Ratio of polymer chant (A) in AB copolymer [wt%] |
| | Structural unit (a1) | Structural unit (a2) | Structural unit (a3) | Structural unit (b1) | Structural unit (b2) | |
| | myrcene | butyl acrylate | anyl methacrylate | methyl methacrylate | butyl acrylate | |
| AB copolymer 1-1 | 34.6 | 65 | 0.4 | 99 | 1 | 55 |
| AB copolymer 1-2 | 24.6 | 75 | 0.4 | 99 | 1 | 55 |
| AB copolymer 1-3 | 99.6 | 0 | 0.4 | 99 | 1 | 60 |
| AB copolymer 1-4 | 89.6 | 10 | 0.4 | 99 | 1 | 60 |
| AB copolymer 1-5 | 79.6 | 20 | 0.4 | 99 | 1 | 60 |
| AB copolymer 1-6 | 59.6 | 40 | 0.4 | 99 | 1 | 60 |
| AB copolymer 1-7 | 99.6 | 0 | 0.4 | 99 | 1 | 70 |
| AB copolymer 1-8 | 89.6 | 10 | 0.4 | 99 | 1 | 70 |
| AB copolymer 1-9 | 79.6 | 20 | 0.4 | 99 | 1 | 85 |
| AB copolymer 1-10 | 34.6 | 65 | 0.4 | 99 | 1 | 85 |
| AB copolymer 1-11 | 24.6 | 75 | 0.4 | 99 | 1 | 85 |

[AB copolymer 1-1]

(Production of polymer chain (A))

34.6 parts of myrcene (manufactured by Yasuhara Chemical Co., Ltd.), 65 parts of butyl acrylate, and 0.4 parts of allyl methacrylate (manufactured by Mitsubishi Chemical Corporation) as monomers, and 0.8 parts of sodium dodecylbenzenesulfonate as an emulsifier were used. These were added to 64 parts of deionized water, and the resulting mixture was stirred at 15,000 rpm for 5 minutes to obtain a stable premixed emulsion.

The obtained premixed emulsion and 240 parts of deionized water were placed in a polymerization apparatus equipped with a stirrer, a condenser tube, and a thermometer, and after the inside of the polymerization apparatus was sufficiently replaced with nitrogen, the temperature was raised to 70°C. Subsequently, 4.0 parts of Percumyl P (manufactured by NOF Corporation) as a polymerization initiator, 0.002 parts of ferrous sulfate and 0.006 parts of sodium ethylenediaminetetraacetate as reducing agents, and 0.3 parts of sodium formaldehyde sulfoxylate were added to initiate polymerization. After 5 hours, a solution obtained by continuously dropwise adding butyl acrylate (manufactured by Mitsubishi Chemical Corporation) as a monomer and 0.2 parts of Percumyl P (manufactured by NOF Corporation) over 60 minutes, and stirring was continued for an additional 120 minutes to obtain a polymer chain (A) latex.

(Production of AB copolymer)

An AB copolymer was produced by polymerizing 99 parts by mass of methyl methacrylate and 1 part of butyl acrylate as monomers in the obtained polymer chain (A) latex. Table 2 shows the ratio of the polymer chain (A) with respect to a total of 100% by mass of the polymer chain (A) and the polymer chain (B).

0.4 parts of t-butyl hydroperoxide was added as a polymerization initiator with respect to a total of 100 parts by mass of the monomers used for producing the polymer chain (B), and the obtained solution was continuously added dropwise to the polymer chain (A) latex over 60 minutes to carry out polymerization. After that, the temperature inside the polymerization apparatus was raised to 75°C, and stirring was continued for 120 minutes.

0.25 parts of Irg 1076 (n-octadecyl-3-(3',5'di-t-butyl-4'-hydroxyphenyl) propionate, manufactured by BASF Japan Ltd.) as a phenol-based antioxidant, and 0.75 parts of DLDTP (didodecyl 3,3'-thiodipropionate, manufactured by Bayer AG) as a thioether-based antioxidant were added to the obtained AB copolymer latex. The resulting mixture was added to 460 parts of deionized water containing 5 parts by mass of calcium acetate, and coagulated, washed with water, dehydrated and dried to obtain an AB copolymer in the form of a powder.

[AB copolymer 1-2, AB copolymer 1-4, AB copolymer 1-5, AB copolymer 1-6, AB copolymer 1-8, AB copolymer 1-9, AB Copolymer 1-10, AB copolymer 1-11]

Each AB copolymer was produced in the same manner as that for the AB copolymer 1-1, with the exception that the amount of monomer charged and the ratio of the polymer chain (A) in the AB copolymer were changed as shown in Table 2.

[AB copolymer 1-3]

(Production of polymer chain (A))

99.6 parts of myrcene (manufactured by Yasuhara Chemical Co., Ltd.) and 0.4 parts of allyl methacrylate (manufactured by Mitsubishi Chemical Corporation) as monomers, and 0.8 parts of sodium dodecylbenzenesulfonate as an emulsifier were used. These were added to 64 parts of deionized water, and the resulting mixture was stirred at 15,000 rpm for 5 minutes to obtain a stable premixed emulsion.

The obtained premixed emulsion and 240 parts of deionized water were placed in a polymerization apparatus equipped with a stirrer, a condenser tube, and a thermometer, and after the inside of the polymerization apparatus was sufficiently replaced with nitrogen, the temperature was raised to 70°C. Subsequently, 4.2 parts of Percumyl P (manufactured by NOF Corporation) as a polymerization initiator, 0.002 parts of ferrous sulfate and 0.006 parts of sodium ethylenediaminetetraacetate as reducing agents, and 0.3 parts of sodium formaldehyde sulfoxylate were added to initiate polymerization, and after 6 hours, a polymer chain (A) latex comprising the polymer chain (A) having a crosslinked structure was obtained.

(Production of AB copolymer)

An AB copolymer was produced by polymerizing 99 parts by mass of methyl methacrylate and 1 part of butyl acrylate as monomers in the obtained polymer chain (A) latex.

0.4 parts of t-butyl hydroperoxide was added as a polymerization initiator with respect to a total of 100 parts by mass of the monomers used for producing the polymer chain (B), and the obtained solution was continuously added dropwise to the polymer chain (A) latex over 60 minutes to carry out polymerization. After that, the temperature inside the polymerization apparatus was raised to 75°C, and stirring was continued for 120 minutes.

0.25 parts of Irg 1076 (n-octadecyl-3-(3',5'di-t-butyl-4'-hydroxyphenyl) propionate, manufactured by BASF Japan Ltd.) as a phenol-based antioxidant, and 0.75 parts of DLDTP (didodecyl 3,3'-thiodipropionate, manufactured by Bayer AG) as a thioether-based antioxidant were added to the obtained AB copolymer latex. The resulting mixture was

added to 460 parts of deionized water containing 5 parts by mass of calcium acetate, and coagulated, washed with water, dehydrated and dried to obtain an AB copolymer 1-3 in the form of a powder.

[AB copolymer 1-7]

An AB copolymer 1-7 was produced in the same manner as that for the AB copolymer 1-3, with the exception that the amount of monomer charged and the ratio of the polymer chain (A) in the AB copolymer were changed as shown in Table 2.

The AB copolymers 1-1 to 1-11 were evaluated for powder properties by the following method. The obtained results are shown in Table 3.

(Evaluation of powder properties)

The entire amount of the AB copolymer powder was passed through an 8-mesh sieve (mesh opening: 2.36 mm) specified by JIS Z8801 for 30 seconds, and its passability was evaluated based on the following criteria.

A: The entire amount of the AB copolymer powder passes through the 8-mesh sieve.
B: 30% by mass or more of the AB copolymer powder does not pass through the 8-mesh sieve.
C: The AB copolymer cannot be recovered in the form of a powder and cannot be classified by screening with the 8-mesh sieve.

(Dv, Dn)

The particle diameter of the AB copolymer was measured as follows.

A volume average particle diameter (Dv) and a number average particle diameter (Dn) were obtained by measurement using 5 ml of the AB copolymer latex with a laser diffraction/scattering particle size distribution measuring device (LA-960S, manufactured by Horiba Ltd.). The volume average particle diameter (Dv) was obtained as a 50% cumulative volume particle diameter. The number average particle diameter (Dn) was obtained by dividing the 50% cumulative volume particle diameter by the degree of particle size distribution.

(Impact resistance properties)

<Examples 11 to 21 and Comparative Example 2>

A molded article was produced in the same manner as in Example 1 with the exception that the types and compositions of the resin additives and matrix resins were changed as shown in Table 3, the melt-kneading temperature was changed to 200°C, the molding temperature during molding was changed to 200°C, and the mold temperature was changed to 30°C, and the Charpy strengths at 0°C and 23°C were measured. The obtained results are shown in Table 3. The Charpy strengths at 0°C and 23°C were measured in the same manner as that for the Charpy strength at 30°C.

<Example 22 and Comparative Example 3>

A molded article was produced in the same manner as in Example 1 with the exception that the types and compositions of the resin additives and matrix resins were changed as shown in Table 3, the melt-kneading temperature was changed to 250°C, the molding temperature during molding was changed to 250°C, and the mold temperature was changed to 60°C, and the Charpy strengths at 0°C and 23°C were measured in the same manner as in Example 11. The obtained results are shown in Table 3.

<Example 23 and Comparative Example 4>

A molded article was produced in the same manner as in Example 1 with the exception that the types and compositions of the resin additives and matrix resins were changed as shown in Table 3, the melt-kneading temperature was changed to 260°C, the molding temperature during molding was changed to 260°C, and the mold temperature was changed to 80°C, and the Charpy strengths at 0°C and 23°C were measured in the same manner as in Example 11. The obtained results are shown in Table 3.

[Table 3]

| | Resin material | Resin additive composition | Resin additive properties | | | Impact resistance properties | |
|---|---|---|---|---|---|---|---|
| | | | Powder properties | Particle diameter | | | |
| | | | | Dv | Dn | Charpy strength (23°C) [kJ/m$^2$] | Charpy strength (0°C) [kJ/m$^2$] |
| Ex. 11 | PLA (90 wt%) | AB copolymer 1-1 (10 wt%) | A | 89 | 73 | 2.4 | 2.2 |
| Ex. 12 | PLA (90 wt%) | AB copolymer 1-2 (10 wt%) | A | 90 | 73 | 2.5 | 2.3 |
| Ex. 13 | PLA (90 wt%) | AB copolymer 1-3 (10 wt%) | A | 95 | 74 | 2.1 | 2.5 |
| Ex. 14 | PLA (90 wt%) | AB copolymer 1-4 (10 wt%) | A | 92 | 73 | 2.6 | 2.6 |
| Ex. 15 | PLA (90 wt%) | AB copolymer 1-5 (10 wt%) | A | 90 | 73 | 2.5 | 2_4 |
| Ex. 16 | PLA (90 wt%) | AB copolymer 1-6 (10 wt%) | A | 90 | 73 | 2.5 | 2.5 |
| Ex. 17 | PLA (90 wt%) | AB copolymer 1-7 (10 wt%) | A | 99 | 74 | 53 | 4.1 |
| Ex. 18 | PLA (90 wt%) | AB copolymer 1-8 (10 wt%) | A | 96 | 74 | 5.2 | 4.5 |
| Ex. 19 | PLA (90 wt%) | AB copolymer 1-9 (10 wt%) | B | 95 | 74 | 7.8 | δ3 |
| Ex. 20 | PLA (90 wt%) | AB copolymer 1-10 (10 wt%) | B | 93 | 74 | 6.3 | 4.2 |
| Ex. 21 | PLA (90 wt%) | AB copolymer 1-11 (10 wt%) | B | 97 | 75 | 2.9 | 2.4 |
| Comp. Ex. 2 | PLA (100 wt%) | - | - | - | - | 2 | 1.7 |
| Ex. 22 | Durabio (90 wt%) | AB copolymer 1-7 (10 wt%) | A | 99 | 74 | 12.7 | 7.2 |
| Comp. Ex. 3 | Durabio (100 wt%) | - | - | - | - | 7.1 | 5.1 |
| Ex. 23 | PMMA (75 wt%) | AB copolymer 1-7 (25 wt%) | A | 99 | 74 | 2.4 | 2.2 |
| Comp. Ex. 4 | PMMA (100 wt%) | - | - | - | - | 1.3 | 1.1 |

The abbreviations in Table 3 are as follows.

PMMA: polymethyl methacrylate (VH001 manufactured by Mitsubishi Chemical Corporation).

PLA: polylactic acid (Ingeo 3001D manufactured by NatureWorks LLC.).

Durabio: isosorbide copolymerized polycarbonate (Durabio D7340R manufactured by Mitsubishi Chemical Corporation).

For example, in Comparative Example 2 in which no resin additive was used, the Charpy strength of the molded article at 0°C was 1.7. On the other hand, the molded articles of Examples 11 to 21, to which the AB copolymer was

added as the resin additive, had strengths approximately 1.3 to 5.5 times higher. As described above, in Examples 11 to 21, the impact resistance properties were considerably improved.

Similar tendencies can be observed by comparing Example 22 and Comparative Example 3, and by comparing Example 23 and Comparative Example 4. Further, among these Examples, in Examples 19 to 21 in which the ratio of the polymer chain (A) with respect to 100% by mass of the AB copolymer was greater than 80% by mass, the amount of aggregation of each polymer in the powder evaluation was high, and powders that did not pass through the sieve were observed. On the other hand, in Examples 11 to 18, the polymers passed through the sieve substantially without aggregation with each other, and were excellent in powder properties. From these results, it can be seen that by setting the ratio of the polymer chain (A) to 80% by mass or less with respect to a total of 100% by mass of the polymer chain (A) and the polymer chain (B), not only excellent impact resistance properties can be obtained, but also excellent powder properties can be obtained.

[Industrial Applicability]

According to the present invention, there are provided a resin additive capable of imparting low temperature impact properties to a resin material, a resin composition comprising the resin additive, and a molded article formed from the resin composition.

## Claims

1. A resin additive that is a polymer comprising a structural unit (a1) derived from a monomer (1) represented by the following formula (1),

[Chemical Formula 1]

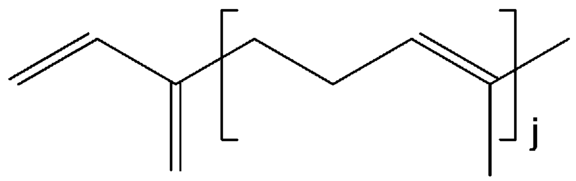

・・・（1）

wherein j is an integer from 1 to 5.

2. The resin additive according to Claim 1,
wherein the polymer is a copolymer comprising a polymer chain (A) having the structural unit (a1) and a polymer chain (B) that does not substantially have the structural unit (a1).

3. The resin additive according to Claim 2,
wherein the polymer chain (A) comprises a crosslinked structure.

4. The resin additive according to Claim 2 or 3,
wherein the polymer chain (A) further comprises a structural unit (a2) derived from an alkyl (meth)acrylate.

5. The resin additive according to Claim 4,
wherein the alkyl (meth)acrylate is methyl methacrylate.

6. The resin additive according to any one of Claims 2 to 5,
wherein a ratio of the structural unit (a1) is from 30 to 99.9% by mass with respect to 100% by mass of the polymer chain (A).

7. The resin additive according to any one of Claims 2 to 6,
wherein the polymer chain (A) has a glass transition temperature of less than 0°C.

8. The resin additive according to any one of Claims 2 to 7,
wherein the polymer chain (B) comprises a structural unit (b1) derived from an alkyl (meth)acrylate.

9. The resin additive according to Claim 8, wherein the alkyl (meth)acrylate is methyl methacrylate.

10. The resin additive according to any one of Claims 2 to 9, wherein a ratio of the polymer chain (A) is from 50 to 90% by mass with respect to a total of 100% by mass of the polymer chain (A) and the polymer chain (B).

11. The resin additive according to any one of Claims 2 to 10, wherein a ratio of the polymer chain (A) is 80% by mass or less with respect to a total of 100% by mass of the polymer chain (A) and the polymer chain (B).

12. The resin additive according to any one of Claims 2 to 11, wherein the copolymer is a graft copolymer in which the polymer chain (B) is a graft chain.

13. A resin additive that is a graft copolymer obtained, in the presence of a polymer chain (A) having a structural unit (a1) derived from a monomer (1) represented by the following formula (1), by polymerizing a vinyl monomer component that does not comprise the monomer (1),

[Chemical Formula 2]

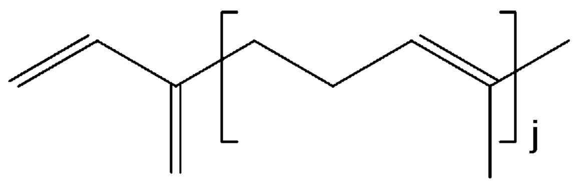

・・・ (1)

wherein j is an integer from 1 to 5.

14. The resin additive according to Claim 13, wherein the vinyl monomer component is used in an amount of 10 to 50 parts by mass with respect to 100 parts by mass of the polymer chain (A).

15. The resin additive according to any one of Claims 1 to 14, wherein the monomer (1) is a monomer derived from a plant.

16. The resin additive according to any one of Claims 1 to 15, wherein j is 1 in the formula (1).

17. A resin composition comprising:

the resin additive according to any one of Claims 1 to 16; and
a resin material.

18. The resin composition according to Claim 17, wherein a ratio of the resin additive is from 0.1 to 40% by mass with respect to a total of 100% by mass of the resin additive and the resin material.

19. A molded article formed from the resin composition according to Claim 17 or 18.

**INTERNATIONAL SEARCH REPORT**

International application No.
**PCT/JP2022/005940**

**A. CLASSIFICATION OF SUBJECT MATTER**

***C08F 279/02***(2006.01)i; ***C08F 220/00***(2006.01)i; ***C08L 9/00***(2006.01)i; ***C08L 33/06***(2006.01)i; ***C08L 33/12***(2006.01)i; ***C08L 101/00***(2006.01)i
FI: C08F220/00; C08L33/06; C08L33/12; C08L101/00; C08L9/00; C08F279/02

According to International Patent Classification (IPC) or to both national classification and IPC

**B. FIELDS SEARCHED**

Minimum documentation searched (classification system followed by classification symbols)

C08F279/02; C08F220/00; C08L9/00; C08L33/06; C08L33/12; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2013-532767 A (AMYRIS, INC.) 19 August 2013 (2013-08-19) claims, paragraphs [0096]-[0101], examples | 1-6, 12 |
| A | | 7-11,13-19 |
| X | JP 2014-189649 A (SUMITOMO RUBBER INDUSTRIES, LTD.) 06 October 2014 (2014-10-06) claims, paragraph [0012] | 1 |
| A | | 2-19 |
| X | WO 2017/038725 A1 (KURARAY CO.) 09 March 2017 (2017-03-09) claims, paragraphs [0022], [0027], [0042], [0052], examples | 1-3, 6, 7, 11, 12 |
| A | | 4, 5, 8-10, 13-19 |
| X | JP 2017-110070 A (TOYO TIRE & RUBBER CO., LTD.) 22 June 2017 (2017-06-22) claims, paragraphs [0024]-[0027] | 1 |
| A | | 2-19 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 March 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/005940**

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2017-145423 A (KURARAY CO., LTD.) 24 August 2017 (2017-08-24)<br>claims, examples | 1, 2, 7, 10, 11<br>3-6, 8, 9, 12-19 |
| A | JP 6-313016 A (ASAHI CHEMICAL INDUSTRY CO., LTD.) 08 November 1994 (1994-11-08)<br>entire text | 1-19 |
| A | JP 2015-511266 A (AMYRIS, INC.) 16 April 2015 (2015-04-16)<br>entire text, all drawings | 1-19 |

Form PCT/ISA/210 (second sheet) (January 2015)

**INTERNATIONAL SEARCH REPORT**
**Information on patent family members**

International application No.
**PCT/JP2022/005940**

| Patent document cited in search report | Publication date (day/month/year) | Patent family member(s) | Publication date (day/month/year) |
|---|---|---|---|
| JP 2013-532767 A | 19 August 2013 | US 2013/0123379 A1<br>claims, paragraphs [0114]-[0118], examples<br>EP 2601229 A1<br>CN 103052664 A<br>KR 10-2013-0124153 A | |
| JP 2014-189649 A | 06 October 2014 | US 2014/0296373 A1<br>claims, paragraph [0024]<br>EP 2783880 A1<br>CN 104072825 A | |
| WO 2017/038725 A1 | 09 March 2017 | TW 201714899 A | |
| JP 2017-110070 A | 22 June 2017 | US 2018/0346694 A1<br>claims, paragraphs [0131]-[0134]<br>CN 108473721 A | |
| JP 2017-145423 A | 24 August 2017 | US 2015/0057403 A1<br>claims, examples<br>EP 2835386 A1<br>TW 201402628 A<br>CN 104350075 A<br>KR 10-2014-0146091 A | |
| JP 6-313016 A | 08 November 1994 | (Family: none) | |
| JP 2015-511266 A | 16 April 2015 | US 2015/0025193 A1<br>entire text, all drawings<br>EP 2817342 A1<br>CN 104203989 A<br>KR 10-2014-0130183 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021025659 A
- JP S4910237 A
- JP 2015172208 A


### Non-patent literature cited in the description


- Polymer Handbook. Wiley-Interscience, vol. 1